Europäisches Patentamt

**European Patent Office**

Office européen des brevets

(11) Publication number: **0 217 227 B1**

# EUROPEAN PATENT SPECIFICATION

(45) Date of publication of patent specification: **10.04.91**  (51) Int. Cl.⁵: **G03B 27/58**, G03B 17/26

(21) Application number: **86112810.6**

(22) Date of filing: **17.09.86**

(54) **Container for roll of light-sensitive strip material.**

(30) Priority: **19.09.85 JP 143255/85**
**04.12.85 JP 186114/85**

(43) Date of publication of application:
**08.04.87 Bulletin 87/15**

(45) Publication of the grant of the patent:
**10.04.91 Bulletin 91/15**

(84) Designated Contracting States:
**DE FR GB NL**

(56) References cited:
**EP-A- 0 064 650**
**DE-A- 2 640 444**
**DE-A- 3 033 464**
**DE-A- 3 346 495**

(73) Proprietor: **Fuji Photo Film Co., Ltd.**
**210 Nakanuma Minamiashigara-shi**
**Kanagawa-ken(JP)**

(72) Inventor: **Mutsuo, Akao**
**c/o Fuji Photo Film Co., Ltd. 2-1 Ougi-cho**
**1-chome**
**Odawara-shi, Kanagawa-ken(JP)**
Inventor: **Yoshihiro, Nishiyama**
**c/o Fuji Photo Film Co., Ltd. No. 210,**
**Nakanuma**
**Minami-Ashigara-shi, Kanagawa-ken(JP)**

(74) Representative: **Kraus, Walter, Dr. et al**
**Patentanwälte Kraus, Weisert & Partner**
**Thomas-Wimmer-Ring 15**
**W-8000 München 22(DE)**

## Description

This invention relates to a container for a roll of a light-sensitive strip material such as a photographic roll film or a roll of photographic paper. More particularly, this invention relates to a lightproof container having an opening for drawing out the above light-sensitive strip material where teremp cloth is provided.

As the container for a roll of a light-sensitive strip material, various types have been disclosed in Japanese Patent KOKAI Nos. 54-36924, 55-124140, 57-128333 and 57-190948, Japanese Utility Model KOKAI Nos. 55-87525, 55-88980 and 55-113543 and Japanese Utility Model KOKOKU Nos. 46-20539 and 55-31542.

For example, a lightproof container for a roll of photographic photosensitive material capable of loading easily under room light was proposed in Japanese Utility Model KOKAI No. 55-113543. This container was a kind of magazine having a slit for drawing out a photographic photosensitive strip material, and in order to secure lightproof, foamed pad or felt pad was provided to the slit.

Like this, a light-shielding member is generally provided at the drawing out part of a container for a light-sensitive strip material in order to prevent that the inner light-sensitive strip material is exposed to the light leaked from the drawing out part. Various light-shielding members are known, and among these, the light-shielding members mainly composed of cloth are called teremp cloth. This teremp cloth is widely employed because scratches are not formed on the face of the strip material

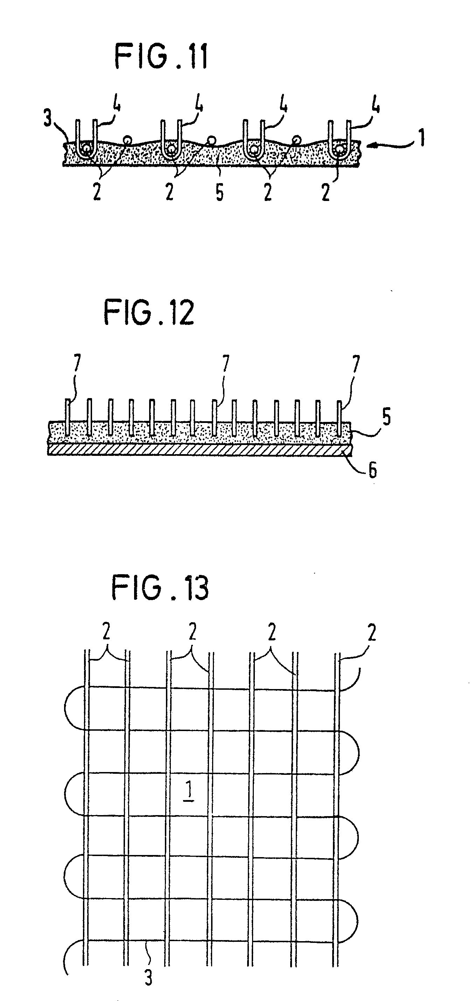

An example of conventional teremp cloth disclosed in Japanese Utility Model KOKOKU No. 46-20539 is shown in FIGURE 11. This teremp cloth was composed of a woven ground fabric 1 and coreless pile yarn 4 woven thereinto. The ground fabric 1 was formed by weaving the warp 2 and the woof 3 like shown in FIGURE 13. The above coreless pile yarn was formed from a soft raw yarn such as viscose yarn or acetate yarn by crimp processing, and the ground fabric 1 was impregnated with an adhesive material 5 for filling in order to fix the pile yarn 4. Generally, such a teremp cloth was manufactured first by weaving the warp 2 and the woof 3 together with entangling pile warp yarn 4 therein to form double velvet and then by cutting the loop.

Another example of conventional teremp cloth disclosed in Japanese Patent KOKAI No. 54-36924 is shown in FIGURE 12. This teremp cloth was manufactured by providing an adhesive material 5 layer on a base material 6 of the container such as metal plate and then setting short fiber 7 electrostatically.

Furthermore, it is also known that short fiber is directly set in the thermoplastic resin of the opening to secure lightproofness (Japanese Patent KOKAI No. 57-190948).

However, in the case of the conventional teremp cloth as shown in FIGURE 11, fray or falling out of pile yarn occurs during manufacturing the teremp cloth and drawing out or in the light-sensitive strip material. Dust of the pile yarn adheres on the surface of the light-sensitive material, it causes troubles in exposure and development. In addition, it is necessary to arrange the orientation of pile yarn not so as to occur meander movement of the light-sensitive material during its drawing out. It is also a problem that its manufacture process is complicated and manufacturing cost is expensive. Particularly, in the case of the container for a roll of photographic color printing paper capable of loading in a light room, adhesion of pile yarn dust is a serious problem under high temperature and high humidity conditions because of increasing adhesion of gelatin layer.

In the case of the conventional teremp cloth as shown in FIGURE 12, falling out of pile yarn is a large problem, and accordingly, it is impractical.

The above problems of the teremp cloths are considered to be improved by utilizing pile knit (raising knit) which is pile texture of knitted fabric. Even in this case, in order to improve the defect that pile yarn is liable to fall out, fixation of pile yarn is raised by using highly shrinkable yarn as ground yarn to constrict stitch by heat treatment or by using an adhesive. And, tips of the pile yarns are extended well by using special yarn capable of bulking by heat treatment. However, waste pile yarn formed during raising and shearing remains in plush, and it adheres on the surface of light-sensitive strip material.

It is an object of the invention to provide a container for a roll of a light-sensitive strip material not giving rise to problems in exposure and development caused by adhesion of pile yarn dust.

It is another object of the invention to provide a container for a roll of a light-sensitive strip material preventing meander movement of the light-sensitive strip material during its drawing out.

It is still another object of the invention to provide a container for a roll of a light-sensitive strip material using teremp cloth that can be manufactured easily and inexpensively.

The present invention provides a container for a roll of a light-sensitive strip material which has achieved these objects. Such a container has a drawing-out opening for the light-sensitive strip material at which opening teremp cloth having piles of yarn is provided, and it is characterized in that the ground fabric structure of the teremp cloth is a knit structure and more than 20% of the piles are looped.

FIGURES 1 to 4 are schematically illustrated sectional views of teremp cloths used for containers of the invention.

FIGURES 5 and 6 are enlarged actual sectional views of teremp cloths used for containers of the invention.

FIGURE 7 is a schematic plan view illustrating a knit structure.

FIGURES 8 to 10 are perspective views of containers embodying the invention.

FIGURES 11 and 12 are schematically illustrated sectional views of teremp cloths used for conventional containers.

FIGURE 13 is a schematic plan view illustrating a woven structure.

The teremp cloth applicable to the container of the invention is characterized in that more than 20% of the pile yarn is looped. The remaining pile yarn is opened (sheared) to form fluff. In view of prevention of pile yarn dust generation, it is preferable that all pile yarns are looped. However, such looped pile is inferior to fluffed pile in softness and light-shielding. Moreover, when all pile yarns are formed loop, directionality appears to cause meander movement of the light-sensitive material. Therefore, the pile yarns are preferably formed a mixture of loops and fluffs. Suitable amount of looped piles is in the range of 90% to 20%, that is, the amount of fluffed piles is 10% to 80%. Preferable amount of looped piles is in the range of 80% to 40%. Looped piles and fluffed piles are preferably arranged uniformly. Fluffed piles are preferably formed taller than looped piles like a semi-cut pile. In this case, fluffed piles are at the surface portion, and both looped piles and fluffed piles are at the inner portion. By this structure, falling out of pile yarn, softness, light-shielding, etc. are improved.

Structure of the ground fabric is a knit structure which is generally double weave such as warp backed weave or weft backed weave. The above piles may be formed either by warp yarn or by weft yarn. The ground fabric may be set with heat or impregnated with an adhesive filling material in order to prevent deformation of the teremp cloth.

Preferable material of the yarn forming the teremp cloth is a synthetic fiber of a thermoplastic resin such as nylon® fiber, acrylic fiber, polyester fiber, vinylon® (polyvinyl alcohol) fiber, vinyl chloride fiber, vinyl chloride-vinylidene copolymer fiber, polypropylene fiber, polyethylene fiber and polycarbonate fiber. These fibers are superior to natural fibers in the point capable of cutting by fusing such as heat-slitting or supersonic-slitting without forming a fray at the cut portion. Other superiorities of these fibers are uniform quality, small hygroscopicity, well heat setting after raising, large physical strength, etc. However, other synthetic fibers, such as rayon fiber and acetate fiber, and natural fibers such as cotton fiber and silk fiber may be used as itself or blended with the thermoplastic resin fiber according to the properties required. The teremp cloth may be composed of two or more kinds of yarns.

The teremp cloth of the invention should be colored with a dye or a pigment in order to secure light-shielding. Preferable color is a dark color, and black is the most preferable.

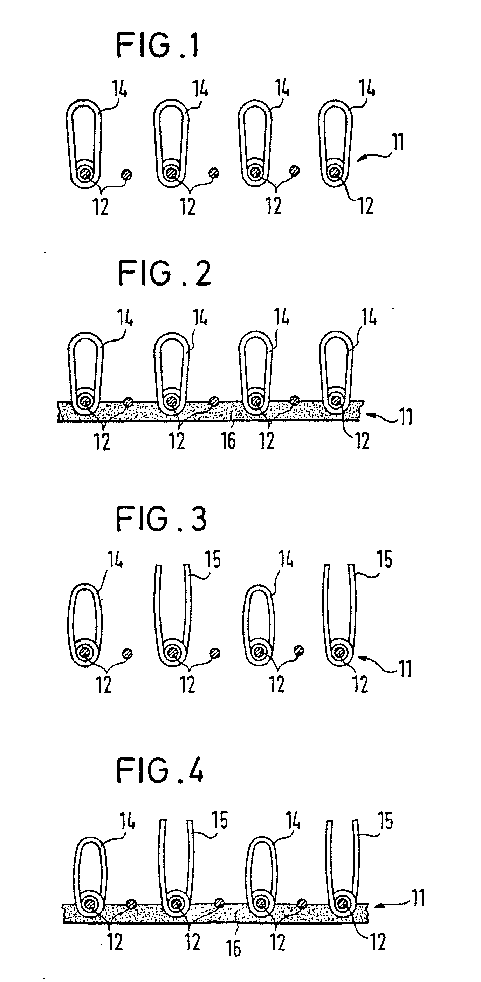

Several embodiments of the teremp cloth applicable to the container of the invention are schematically illustrated in FIGURES 1 to 4.

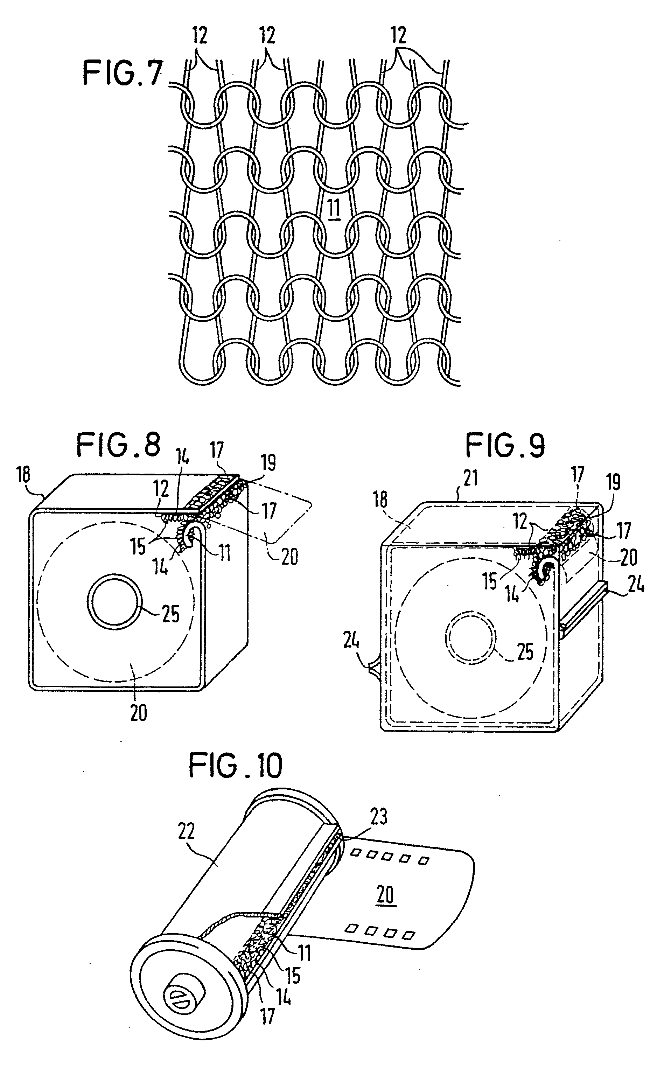

The embodiment of FIGURE 1 is that pile yarn 14 is knitted to warp 12 of the warp knitted fabric like shown in FIGURE 7 so as to form a loop. In the embodiment of FIGURE 2, the ground fabric 11 of the teremp cloth of FIGURE 1 is impregnated with an adhesive filling. material 16 in order to prevent deformation of teremp cloth. In the embodiment of FIGURE 3, looped pile 14 and fluffed pile 15 line alternatively, and the number of looped piles is equal to the number of fluffed piles. Most ends of the fluffed piles are more projecting than the looped piles. In the embodiment of FIGURE 4, the ground fabric 11 of the teremp cloth of FIGURE 3 is further impregnated with an adhesive filling. material 16

When the teremp cloth of the invention is manufactured, first, a knitted fabric having looped piles projected therefrom is formed.

Such a knitted fabric may be prepared either from weft knitted fabric such as circularly knitted fabric and flatly knitted fabric or from warp knitted fabric such as tricot fabric, raschel fabric and milanese fabric by raising to form looped piles. On the other hand, the knitted fabric having looped piles may directly be formed by using a circular knitting machine or a circular hosiery knitting machine. These methods are explained in detail in "Seni Kogaku" vol. 33, No. 7, pp 390-397 (1980).

Particularly preferable knitted fabrics are sinker pile teremp cloths formed by using a circular knitting machine and French pile teremp cloths knitted by using a tricot warp knitting machine whereby the weft of the knitted fabric is drawn out by needles to form loops. They are made of the yarn containing more than 50% of polyester fiber, acrylic fiber, or nylon® fiber colored black.

In the case that all pile yarns of the teremp cloth are looped, the above teremp cloth may be used for the container of the invention as it is. On the other hand, in the case that a part of the pile yarns are opened, such pile yarns are, for example, raised and then sheared to a definite length between the longest

3

pile and the shortest pile. Since pile yarns have usually a distribution in length, the amount of fluffed piles can be controlled by shearing length. In this regard, the knitted fabric, particularly the warp knitted fabric, of which loops are formed by drawing out by needles is preferable because of having a suitable distribution in length of the loops.

In the container of the invention, the teremp cloth mentioned heretofore is provided at the opening for drawing out the light-sensitive strip material packaged, and shields light. The kind of the light-sensitive strip material is not limited, and includes photographic printing paper, printing paper for computerized type-setting system and photographic film such as JIS 135-type. Structure of the container may be known where teremp cloth is replaced by the above-mentioned one.

The teremp cloth may be provided by any known method. For example, any suitable adhesive is applied on the pasting position, and the teremp cloth which is cut into a prescribed size is stuck thereon. As another method, a hot-melt adhesive is applied on the teremp cloth to which a filling material is previously coated, and it is cut into a prescribed size. Then, this piece is placed on the pasting position, and stuck by using heat, supersonic wave or high-frequency wave. A piece of the teremp cloth may be stuck by using an adhesive material for filling or a double face adhesive tape. The double face adhesive tape is suitable for the container made of not so rigid and deformable material such as paper board and corrugated board.

A foamed sheet disclosed in Japanese patent KOKAI No. 59-201848, a foamed coating layer or an elastic sheet may preferably be provided between the face of the body of the container and the teremp cloth. For example, utilization of the double face adhesive tape composed of a foamed sheet of which both faces are coated with an adhesive is preferable.

In the teremp cloth used for the container of the invention, each pile yarn winds round the warp or the weft of ground fabric, and therefore fray or falling out of pile yarn does not occur. Generation of pile yarn dust during the manufacturing process is minor, and troubles in exposure and development caused by adhesion of pile yarn dust are solved even under high temperature and high humidity conditions. This teremp cloth is inexpensive, and its manufacturing speed is several times higher than the conventional teremp cloth. When the piles of the teremp cloth are a mixture of looped piles and fluffed piles, softness and light-shielding are good, and meander movement of the light-sensitive material does not occur.

EXAMPLES

Example 1

A light-shielding teremp cloth having the structure of FIGURE 3 was manufactured.

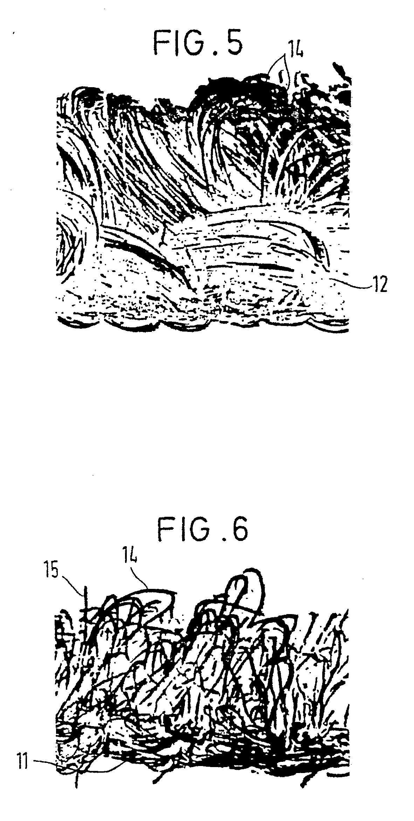

The warp 12 of 50 deniers black polyester yarn (Teijin Ltd.) and the weft of 50 deniers black polyester yarn (Teijin Ltd.) were knitted by a tricot warp knitting machine to form a knitted fabric. The weft was drawn out by needles to form loops, and sheared so that pile length became 1.1 mm. Thus, the light-shielding teremp cloth as shown in FIGURE 6 was obtained. Ratio of the looped piles of this teremp cloth was 70%, and ratio of the fluffed piles was 30%.

This teremp cloth was provided at the drawing out opening of the container shown in FIGURE 8. This container is used for a photographic color printing paper or a printing paper for computerized type-setting system. The container body 18 is box-shaped, and made of plastic resin or paper. A drawing out opening 19 is provided at one corner side, and the teremp cloth 17 was stuck on both inner faces being opposite to each other. Core 25 for supporting the roll of the light-sensitive strip material 20 is provided at the center of the container.

Another example of the container is shown in FIGURE 9 This container is a modification of the above container, and protection of the light-sensitive material and moistureproofness (and light-shielding) are raised by wrapping with a moistureproof film 21 to seal it. 24 indicates its heat-sealing portion. This moistureproof film is a laminated film of an aluminum-metallized thermoplastic resin film layer and a heat-sealing layer or an inflation film of a thermoplastic resin. The moistureproof film may be endowed with light-shielding property.

Still another example of the container is shown in FIGURE 10. This container is JIS 135-type film cartridge. A drawing out opening 23 is provided at the cylindrical face of the cartridge body 22 in its longitudinal direction, and the teremp cloth 17 was stuck on both inner faces being opposite to each other.

Example 2

A light-shielding teremp cloth having the structure of FIGURE 1 was manufactured.

The warp 12 of 75 deniers black polyester yarn (Kuraray Co., Ltd.) and the weft of 100 deniers black polyester yarn ("Microcrater Yarn", Kuraray Co., Ltd.) were knitted by a circular knitting machine to form the teremp cloth having a sinker pile knitting structure as shown in FIGURE 5. The piles were all looped piles, and its total thickness was 1.3 mm. Pile length was 0.94 to 0.99 mm. This teremp cloth was provided on both inner faces of the drawing out opening of the container shown in FIGURE 8.

Properties of the above containers were compared with the following comparative example and the conventional example as to the container of FIGURE 8.

The light-shielding teremp cloth employed in the comparative example is as follows. That is, the same warp and the same weft as Example 1 were knitted by a tricot warp knitting machine to form a knitted fabric. The weft of the knitted fabric was drawn out by needles to form loops, and all looped piles were sheared so that pile length became 1.05 mm to form a tricot knitted fabric having fluffed piles. This teremp cloth was stuck to the drawing out opening of the container of FIGURE 8.

Structure of the light-shielding teremp cloth employed in the conventional example is shown in FIGURE 11. 150 deniers black rayon yarn was employed as the warp, and 75 deniers black rayon yarn was employed as the weft. This teremp cloth was stuck to the drawing out opening of the container of FIGURE 8.

Properties of the above containers are shown in the following table.

| | Invention | | Compara-tive | Conven-tional | Testing Method |
| --- | --- | --- | --- | --- | --- |
| | 1 | 2 | | | |
| Manufacture | Tricot Knitting | Sinker Pile Knitting | Tricot Knitting | Velvet Weaving | |
| Looped Piles | 70% | 100% | 0% | 0% | |
| Fluffed Piles | 30% | 0% | 100% | 100% | |
| Light-Shielding | B | B | A | A | I |
| Fray at Cut Portion | A | A | B | E | II |
| Pile Cutting Dust | A | A | D | E | II |
| Falling Out of Piles | A | A | B | E | II |
| Meander Movement | B | C | B | B | III |
| Scratches | B | C | B | B | IV |
| Cost Ratio | 30 | 28 | 33 | 100 | V |

Evaluations are as follows:

A: very excellent   B: excellent

C: practical   D: having a problem

E: impractical

Testing methods are as follows:

5

I: A photographic color printing paper was admitted in each exemplified container, and the container was exposed to the light of 80,000 lux for 30 minutes. The light-shielding property was estimated by the fogging degree of the developed color printing paper.

II: A photographic color printing paper was admitted in each exemplified container, and the container was allowed to stand at 30°C under 80% RH for 12 hours. Then, the color printing paper was drawn out, and a fray at the cut portion, pile cutting dust and falling out of piles were estimated by adhered dusts on the face of the color printing paper.

III: A photographic color printing paper was admitted in each exemplified container, and meander movement was estimated by the movement of the color printing paper during its drawing out and rolling up.

IV: A photographic color printing paper was admitted in each exemplified container, and it was drawn out at a speed of 1 m/sec. This item was estimated by the scratches formed of the face of the color printing paper.

V: Cost of the conventional teremp cloth was set as 100.

In the film cartridge of FIGURE 10, similar results were obtained.

## Claims

1. A container for a roll of a light-sensitive strip material having a drawing out opening for said light-sensitive strip material at which opening teremp cloth having piles of yarn is provided; characterized in that the ground fabric structure of said teremp cloth is a knit structure and more than 20% of the piles are looped.

2. The container for a roll of a light-sensitive strip material of claim 1 wherein the amount of said looped piles is in the range of 90 to 20% and the remaining piles are fluffed.

3. The container for a roll of a light-sensitive strip material of claim 1 wherein the piles are all looped.

4. The container for a roll of a light-sensitive strip material of claim 2 wherein said fluffed piles are taller than said looped piles.

5. The container for a roll of a light-sensitive strip material of claim 1 wherein said knit structure is a warp backed weave or a weft backed weave.

6. The container for a roll of a light-sensitive strip material of claim 1 wherein said ground fabric is set with heat or impregnated with an adhesive filling material.

7. The container for a roll of a light-sensitive strip material of claim 1 wherein said teremp cloth is made of a synthetic fiber of a thermoplastic resin.

8. The container for a roll of a light-sensitive strip material of claim 7 wherein said synthetic fiber is a member selected from the group consisting of nylon® fiber, acrylic fiber, polyester fiber, polyvinyl alcohol fiber, vinyl chloride fiber, vinyl chloride-vinylidene copolymer fiber, polypropylene fiber, polyethylene fiber and polycarbonate fiber.

9. The container for a roll of a light-sensitive strip material of claim 1 wherein said looped piles are formed by knitting or raising of the warp or the weft of the knitted fabric.

10. The container for a roll of a light-sensitive strip material of claim 1 wherein said teremp cloth is a sheared or unsheared sinker pile teremp cloth formed by using a circular knitting machine or a sheared or unsheared French pile teremp cloth knitted by using a tricot warp knitting machine whereby the weft of the knitted fabric is drawn out to form loops.

11. The container for a roll of a light-sensitive strip material of claim 10 wherein said teremp cloth is made of a yarn containing more than 50% of polyester fiber, acrylic fiber or nylon® fiber.

**12.** The container for a roll of a light-sensitive strip material of claim 1 wherein a foamed sheet, a foamed coating layer or an elastic sheet is provided between the face of the body of said container and said teremp cloth.

**13.** The container for a roll of a light-sensitive strip material of claim 1 wherein said light-sensitive strip material is photographic printing paper, printing paper for a computerized type-setting system or photographic film.

**Revendications**

**1.** Conteneur pour un rouleau de matériau en bande sensible à la lumière, présentant, pour ledit matériau en bande sensible à la lumière, une ouverture de tirage à laquelle est prévu un tissu teremp comprenant des poils de fil; caractérisé par le fait que la structure du tissu de fond dudit tissu teremp est une structure triootée et que plus de 20% des poils sont bouclés.

**2.** Conteneur pour un rouleau de matériau en bande sensible à la lumière de la revendication 1 dans lequel la proportion desdits poils bouclés va de 90 à 20% tandis que les autres poils sont coupés.

**3.** Conteneur pour un rouleau de matériau en bande sensible à la lumière de la revendication 1 dans lequel les poils sont tous bouclés.

**4.** Conteneur pour un rouleau de matériau en bande sensible à la lumière de la revendication 2 dans lequel lesdits poils coupés sont plus longs que lesdits poils bouclés.

**5.** Conteneur pour un rouleau de matériau en bande sensible à la lumière de la revendication 1 dans lequel ladite structure tricotée est un tissu tissé double face en chaine ou un tissu tissé double face en trame.

**6.** Conteneur pour un rouleau de matériau en bande sensible à la lumière de la revendication 1 dans lequel on fait durcir ledit tissu de fond à la chaleur ou on l'imprègne d'un matériau de charge adhésif.

**7.** Conteneur pour un rouleau d'un matériau en bande sensible à la lumière de la revendication 1 dans lequel ledit tissu teremp est fabriqué en une fibre synthétique de résine thermoplastique.

**8.** Conteneur pour un rouleau d'un matériau en bande sensible à la lumière de la revendication 7 dans lequel ladite fibre synthétique est un corps choisi dans le groupe comportant fibre de nylon[R], fibre acrylique, fibre de polyester, fibre d'alcool vinylique, fibre de chlorure de vinyle, fibre du copolymère chlorure de vinyle-vinylidène, fibre de polypropylène, fibre de polyéthylène et fibre de polycarbonate.

**9.** Conteneur pour un rouleau d'un matériau en bande sensible à la lumière de la revendication 1 dans lequel lesdits poils bouclés sont formés par tricotage ou bien par grattage de la chaîne ou de la trame du tissu tricoté.

**10.** Conteneur pour un rouleau de matériau en bande sensible à la lumière de la revendication 1 dans lequel ledit tissu teremp est un tissu teremp fait sur platine, coupé ou non coupé, formé par emploi d'un métier à tricoter circulaire, ou bien un tissu teremp à poils français, coupé ou non coupé, tricoté par emploi d'un métier à tricoter en chaîne, étant précisé que la trame du tissu tricoté est tirée au-dehors pour former des boucles.

**11.** Conteneur pour un rouleau de matériau en bande sensible à la lumière de la revendication 10 dans lequel ledit tissu teremp est fabriqué en un fil contenant plus de 50% de fibres de polyester, de fibres acryliques ou de fibres de nylon.

**12.** Conteneur pour un rouleau de matériau en bande sensible à la lumière de la revendication 1 dans lequel une feuille mousse, une couche de revêtement mousse ou une feuille élastique est prévue entre la face du corps dudit conteneur et ledit tissu teremp.

**13.** Conteneur pour un rouleau de matériau en bande sensible à la lumière de la revendication 1 dans lequel ledit matériau en bande sensible à la lumière est du papier d'impression photographique, du papier d'impression pour composition typographique commandée par ordinateur ou un film photographique.

## Ansprüche

**1.** Behälter für eine Rolle lichtempfindlichen Materials in Streifenform, mit einer Ausführöffnung für das lichtempfindliche Material in Streifenform, an welcher ein Teremptuch mit Floren von Garn bereitgestellt ist, dadurch **gekennzeichnet,** daß die textile Grundstruktur des Teremptuches eine gestrickte bzw. gewirkte Struktur ist und daß mehr als 20% der Flore in Schlingenform sind.

**2.** Behälter für eine Rolle lichtempfindlichen Materials in Streifenform nach Anspruch 1, dadurch **gekennzeichnet,** daß die Menge der Flore in Schlingenform im Bereich von 90 bis 20% liegt und daß die verbleibenden Flore aufgeflockt sind.

**3.** Behälter für eine Rolle lichtempfindlichen Materials in Streifenform nach Anspruch 1, dadurch **gekennzeichnet,** daß die Flore alle in Schlingenform vorliegen.

**4.** Behälter für eine Rolle lichtempfindlichen Materials in Streifenform nach Anspruch 2, dadurch **gekennzeichnet,** daß die aufgeflockten Flore höher sind als die Flore in Schlingenform.

**5.** Behälter für eine Rolle lichtempfindlichen Materials in Streifenform nach Anspruch 1, dadurch **gekennzeichnet,** daß die gestrickte bzw. gewirkte Struktur eine Webart auf der Grundlage von Kettfäden oder eine Webart auf der Grundlage von Schußfäden ist.

**6.** Behälter für eine Rolle lichtempfindlichen Materials in Streifenform nach Anspruch 1, dadurch **gekennzeichnet,** daß die textile Grundlage mit Hitze behandelt ist oder mit einem adhäsiven Füllmaterial imprägniert ist.

**7.** Behälter für eine Rolle lichtempfindlichen Materials in Streifenform nach Anspruch 11 dadurch **gekennzeichnet,** daß das Teremptuch aus einer synthetischen Faser aus einem thermoplastischen Harz hergestellt ist.

**8.** Behälter für eine Rolle lichtempfindlichen Materials in Streifenform nach Anspruch 7, dadurch **gekennzeichnet,** daß die synthetische Faser aus der Gruppe bestehend aus Nylon®faser, Acrylfaser, Polyesterfaser, Polyvinylalkoholfaser, Vinylchloridfaser, Vinylchloridvinyliden-Copolymerfaser, Polypropylenfser, Polyethylenfaser und Polycarbonatfaser ist.

**9.** Behälter für eine Rolle lichtempfindlichen Materials in Streifenform nach Anspruch 1, dadurch **gekennzeichnet,** daß die Flore in Schlingenform durch Stricken bzw. Wirken oder Aufrauhen der Kettfäden oder der Schußfäden des gestrickten bzw. gewirkten Gewebes gebildet werden.

**10.** Behälter für eine Rolle lichtempfindlichen Materials in Streifenform nach Anspruch 1, dadurch **gekennzeichnet,** daß das Teremptuch ein geschorenes oder nicht geschorenes Platinenflorteremptuch, gebildet unter Verwendung einer Rundstrick- bzw. Wirkmaschine oder ein geschorenes oder nicht geschorenes French-Flor-Teremptuch, gewirkt unter Verwendung einer Trikotwirkmaschine, ist, wobei die Schußfäden des gestrickten bzw. gewirkten Gewebes unter Bildung von Schlingen herausgezogen werden.

**11.** Behälter für eine Rolle lichtempfindlichen Materials in Streifenform nach Anspruch 101 dadurch **gekennzeichnet,** daß das Teremptuch aus einem Garn, das mehr als 50% Polyesterfaser, Acrylfaser oder Nylonfaser enthält, hergestellt ist.

**12.** Behälter für eine Rolle lichtempfindlichen Materials in Streifenform nach Anspruch 1, dadurch **gekennzeichnet,** daß eine geschäumte Platte bzw. Folie, eine geschäumte Beschichtungsschicht oder eine elastische Platte bzw. Folie zwischen der Oberfläche des Behälterkörpers und dem Teremptuch bereitgestellt wird.

13. Behälter für eine Rolle lichtempfindlichen Materials in Streifenform nach Anspruch 1, dadurch **gekennzeichnet,** daß das lichtempfindliche Material in Streifenform ein photographisches Druckpapier, Druckpapier für ein computerisiertes Schriftsetz-System oder ein photographischer Film ist.

# FIG .1

14 14 14 14

11

12 12 12 12

# FIG .2

14 14 14 14

11

12 12 16 12 12

# FIG .3

14 15 14 15

11

12 12 12 12

# FIG .4

14 15 14 15

11

12 12 16 12 12

FIG.5

FIG.6

FIG.7

FIG.8

FIG.9

FIG.10

# FIG.11

# FIG.12

# FIG.13